# EUROPÄISCHE PATENTSCHRIFT

(11) **EP 2 475 568 B1**
(45) Veröffentlichungstag und Bekanntmachung des Hinweises auf die Patenterteilung: **16.10.2013**
(21) Anmeldenummer: 10747183.1
(22) Anmeldetag: 13.08.2010
(51) Int. Cl.: B62D 15/02, B60T 7/22, B60Q 5/00, B60Q 9/00

(54) **VERFAHREN ZUR UNTERSTÜTZUNG EINES FAHRERS EINES FAHRZEUGS BEIM EINPARKEN ODER AUSPARKEN**
METHOD FOR ASSISTING A VEHICLE DRIVER WHILST ARRIVING AT OR LEAVING FROM A PARKING PLACE
PROCÉDÉ POUR ASSISTER UN CONDUCTEUR DE VÉHICULE LORS D'UN DÉPART PARKING OU D'ARRIVÉE EN PARKING

(30) Priorität: 11.09.2009 DE 102009029388
(43) Veröffentlichungstag der Anmeldung: 18.07.2012
(73) Patentinhaber: Robert Bosch GmbH, 70442 Stuttgart (DE)
(72) Erfinder: STAACK, Jochen, 70178 Stuttgart (DE); SCHNEIDER, Marcus, 71642Ludwigsburg (DE); HOFFMANN, Christian, 71229 Leonberg (DE)
(86) Internationale Anmeldenummer: PCT/EP2010/061823
(87) Internationale Veröffentlichungsnummer: WO 2011/029692

(56) Entgegenhaltungen:
- DE-A1-102007 036 251
- DE-A1-102007 049 709
- US-A1- 2006 250 297

## Beschreibung

### Stand der Technik

Die Erfindung betrifft ein Verfahren zur Unterstützung eines Fahrers eines Fahrzeugs beim Einparken oder Ausparken, bei dem zunächst die Umgebung des Fahrzeugs erfasst wird und eine geeignete Bahn ermittelt wird, um das Fahrzeug in eine Parkposition oder in eine Position, die ein Ausfahren aus der Parklücke ermöglicht, zu bewegen, und Bewegen des Fahrzeugs entlang der Bahn durch automatischen Lenkeingriff oder durch Hinweise über geeignete Lenkpositionen an den Fahrer.

Auf dem Markt existieren verschiedene Systeme, die den Fahrer eines Fahrzeugs beim Einparken in eine Parklücke, insbesondere in eine Längsparklücke, unterstützen. Bei solchen Systemen wird während des Vorbeifahrens an einer Parklücke durch einen seitlich am Fahrzeug angebrachten Sensor der Abstand zu Objekten neben dem Fahrzeug gemessen. Anhand des ermittelten Signalverlaufs wird erkannt, wo sich eine geeignete Parklücke befindet. Ein solches System ist gemäß dem Oberbegriff des Anspruchs 1 aus US 2006 250 297 bekannt. Wenn in eine so ermittelte Parklücke eingeparkt wird, übernimmt das System zur Unterstützung des Fahrers des Fahrzeugs beim Einparken den Lenkvorgang, während der Fahrer nur noch die Bremse und das Fahrpedal zu betätigen hat. Der Lenkeingriff durch das System erfolgt dabei so, dass das einzuparkende Fahrzeug sowohl an den die Parklücke begrenzenden Objekten vorbei lenkt als auch am Ende parallel zu einer Fahrbahnbegrenzung, z.B. einem Bordstein, steht. Alternativ sind auch Systeme am Markt, in denen der Fahrer noch selbst lenken muss, jedoch durch das System Hinweise erhält, wie er jeweils zu lenken hat, um in die Parklücke zu gelangen.

Bereits beschrieben sind weiterhin auch Systeme, in denen das Fahrzeug nicht nur den Lenkvorgang übernimmt, sondern auch die Längsführung, d.h. sowohl das Beschleunigen und Fahren als auch das Bremsen des Fahrzeugs. Auch die Unterstützung des Einparkens in Querparklücken, d.h. solche Parklücken, in die senkrecht zur Fahrzeugrichtung eingeparkt wird, ist bekannt.

Bei vollautomatischen Systemen, d.h. Systemen, die auch die Längsführung übernehmen, wird das Fahrzeug am Ende des Einparkzuges zum Stillstand abgebremst, um so eine Kollision mit einem die Parklücke begrenzenden Objekt zu vermeiden. Bei semiautomatischen Systemen, d.h. solchen, bei denen der Fahrer noch selbst die Längsführung übernimmt, ertönt ein Warnsignal, wenn die Bremse zu betätigen ist.

Problematisch ist das unterstützte Einparken in solchen Situationen, in denen spontan ein Hindernis auftritt. Dies ist z.B. dann der Fall, wenn ein Passant hinter das einzuparkende Fahrzeug läuft, um z.B. von der Straße auf den Bürgersteig zu gelangen. Ein weiteres Problem zur automatisierten Steuerung des Fahrzeuges ist, dass sich solche Objekte bewegen und sich somit aufgrund von Auswertezeiten und Reaktionszeiten des Systems nicht da befinden, wo sie erwartet werden.

### Offenbarung der Erfindung

### Vorteile der Erfindung

Das erfindungsgemäße Verfahren zur Unterstützung eines Fahrers eines Fahrzeugs beim Einparken oder Ausparken umfasst folgende Schritte:
(a) Erfassen der Umgebung des Fahrzeugs während des Einparkens oder Ausparkens und Vergleich mit zuvor erfassten Daten der Umgebung, um Objekte zu erfassen, die zuvor nicht detektiert wurden,
(b) Prüfen, ob ein Anhalten des Fahrzeugs vor einer Kollision mit dem zusätzlich erfassten Objekt noch möglich ist und Einleiten einer Notbremsung oder Ausgabe einer Warnung an den Fahrer, eine Notbremsung einzuleiten, sowie Ergreifen von gefährdungsminimierenden Maßnahmen, wenn eine Kollision nicht oder nur sehr knapp vermieden werden kann.

Durch das erfindungsgemäße Verfahren werden Kollisionen mit für das System zur Unterstützung des Fahrers unerwartet auftretenden Hindernissen, beispielsweise Fußgängern oder auch während der Vermessung der Parklücke nicht bzw. falsch detektierten Objekten, vermieden und es können, falls sich eine Kollision nicht mehr vermeiden lässt, Schäden durch die Kollision an Personen und Gegenständen, insbesondere Fahrzeugen, während des Einparkvorgangs minimiert werden. Das erfindungsgemäße Verfahren eignet sich sowohl für nicht automatisierte als auch für semi-automatisierte und vollautomatisierte Systeme. Nicht automatisierte Systeme im Rahmen der vorliegenden Erfindung sind Systeme, die nur eine Information über den Abstand zu Objekten in der Umgebung des Fahrzeugs an den Fahrer übermitteln, semi-automatisierte Systeme sind solche, die einen Lenkeingriff selbsttätig übernehmen oder dem Fahrer Hinweise zur Lenkführung übermitteln, und vollautomatisierte Systeme sind solche, in denen sowohl die Querführung, d.h. der Lenkeingriff, als auch die Längsführung, d.h. Bremsen, Beschleunigen und Vorwärts- bzw. Rückwärtsfahrt vom Fahrzeug übernommen werden.

Bevorzugt wird das erfindungsgemäße Verfahren bei semi-automatisierten oder vollautomatisierten Einparksystemen eingesetzt. Bei diesen Systemen wird bereits vor dem Einparken die Umgebung des Fahrzeugs erfasst und eine geeignete Bahn ermittelt, um das Fahrzeug in eine Parkposition oder in eine Position, die ein Ausfahren aus der Parklücke ermöglicht, zu bewegen. Anschließend wird das Fahrzeug entlang der Bahn durch einen automatischen Lenkeingriff oder durch Hinweise über geeignete Lenkpositionen an den Fahrer bewegt. Während des Einparkens wird weiterhin die Umgebung erfasst.

Zum Prüfen, ob noch ein Anhalten des Fahrzeugs vor einer Kollision mit einem zusätzlich erfassten Objekt möglich ist, wird der Anhalteweg berechnet. Ein Anhalten des Fahrzeugs vor einer Kollision mit dem zusätzlich erfassten Objekt ist dann möglich, wenn der Anhalteweg kürzer ist als der Abstand des Fahrzeugs zum Objekt. Zur Berechnung des Anhalteweges werden der Abstand zum Objekt, die Geschwindigkeit des Fahrzeugs, gegebenenfalls Geschwindigkeit und Bewegungsrichtung des Objekts und alle Reaktionszeiten berücksichtigt. Die Geschwindigkeit und die Bewegungsrichtung des Objekts lässt sich z.B. durch kontinuierliches Erfassen und eine dadurch detektierte Ortsveränderung des Objekts bestimmen. Jedoch ist auch jedes beliebige andere Verfahren, mit dem Geschwindigkeit und Bewegungsrichtung eines Objekts detektiert werden können, verwendbar. Durch Berücksichtigung der Geschwindigkeit und Bewegungsrichtung des Objekts lässt sich der tatsächliche Punkt einer möglichen Kollision und damit der tatsächlich zur Verfügung stehende Anhalteweg bestimmen. Der Anhalteweg bestimmt sich dabei aus dem während der Reaktionszeit zurückgelegten Weg und dem tatsächlichen Bremsweg.

Reaktionszeiten, die zur Berechnung des Anhalteweges berücksichtigt werden müssen, sind z.B. Totzeiten eines ESP-Systems, Rechenzeiten und Datenübermittlungszeiten an verschiedene Systeme, die berücksichtigt werden müssen, wenn sowohl die Querführung als auch die Längsführung des Fahrzeugs automatisiert erfolgen. Wenn die Längsführung vom Fahrer übernommen wird, sind unter Reaktionszeit sowohl die Reaktionszeit des Fahrers zu berücksichtigen, d.h. die Zeit von der Ausgabe einer Warnung bis zum tatsächlichen Betätigen des Bremspedals und gegebenenfalls notwendige Rechenzeiten und Systemverzögerungszeiten vom Erkennen einer Notfallsituation bis zur Ausgabe der Warnung.

Gefährdungsminimierende Maßnahmen, die ergriffen werden, wenn eine Kollision nicht oder nur sehr knapp vermieden werden kann, sind z.B. Maßnahmen zum Schutz von Personen in der Fahrzeugumgebung und Maßnahmen zum Insassenschutz. Dass die Maßnahmen auch ergriffen werden, wenn die Kollision nur sehr knapp vermieden werden kann, trägt der Problematik Rechnung, dass sie chein Person oder ein Objekt auch bei Ergreifung der Maßnahmen weiter in Richtung des Fahrzeugs bewegen kann, wodurch die Situation verschärft wird.

Geeignete Maßnahmen zum Schutz von Personen in der Fahrzeugumgebung umfassen z.B. die Ausgabe eines Signaltons und ein Auslösen der Warnblinkanlage. Durch die Ausgabe eines Signaltons, im Allgemeinen durch Betätigen des Signalhorns des Fahrzeugs, wird einer Person in der Fahrzeugumgebung eine direkte Warnung zukommen gelassen, dass sie sich in eine Gefahrensituation begeben hat. Üblicherweise wird eine solche Person schnell versuchen, den Gefahrenbereich zu verlassen. Durch das Auslösen der Warnblinkanlage erfolgt ein Hinweis auf eine bevorstehende Gefahrensituation. Durch die Ausgabe eines Signaltons und das Betätigen der Warnblinkanlage erhalten Personen in der Fahrzeugumgebung sowohl eine optische als auch eine akustische Warnung.

Zusätzlich zur Ausgabe eines Signaltons und dem Auslösen der Warnblinkanlage können weitere Fußgängerschutzmaßnahmen eingeleitet werden. Derartige Fußgängerschutzmaßnahmen umfassen z.B. ein Anstellen der Motorhaube. Hierbei wird die Motorhaube auf der Seite der Windschutzscheibe etwas angehoben, um den Aufprallwinkel zu minimieren und auf diese Weise die Verletzungsgefahr für eine Person, die mit dem Fahrzeug kollidiert, zu reduzieren.

Maßnahmen zum Insassenschutz, die eingeleitet werden können, sind z.B. eine Vorbereitung der Gurtstrafferfunktion und eine Vorbereitung des Airbagsystems. Durch die Vorbereitung der Gurtspannerfunktion und des Airbagsystems kann eine rechtzeitige Auslösung dieser Systeme bei einer Kollision erfolgen, um die Insassen des Fahrzeuges vor möglichen Verletzungen, die sich aufgrund einer Kollision ergeben können, zu schützen. Die Vorbereitung der Gurtstrafferfunktion und des Airbagsystems hat den Vorteil, dass eine zusätzliche Reaktionszeit, die sonst zum Auslösen benötigt wird, reduziert werden kann. Das Auslösen der Gurtstraffer und der Airbags kann somit zum optimalen Zeitpunkt erfolgen.

Um gefährdungsminimierende Maßnahmen in der Stärke einzuleiten, wie sie eine mögliche Kollision erfordert, z.B. in Abhängigkeit der Aufprallgeschwindigkeit des Fahrzeuges, ist es vorteilhaft, wenn dem Ergreifen der gefährdungsminimierenden Maßnahmen eine Bewertung von voraussichtlicher Kollisionsstärke, Kollisionswahrscheinlichkeit und dem Kollisionszeitpunkt vorausgeht. Die voraussichtliche Kollisionsstärke, Kollisions-wahrscheinlichkeit und der voraussichtliche Kollisionszeitpunkt werden durch die von im Fahrzeug erfassten Daten hinsichtlich Abstand zum Objekt, Bewegungsrichtung und Geschwindigkeit des Objekts und Fahrzeuggeschwindigkeit ermittelt.

In einer bevorzugten Ausführungsform wird durch eine fortlaufende Erfassung der Umgebung des Fahrzeugs eine Bewegung des zusätzlich erfassten Objekts beobachtet und die Einleitung der Notbremsung oder die Ausgabe der Warnung an den Fahrer, eine Notbremsung einzuleiten, und das Ergreifen von zusätzlichen gefährdungsminimierenden Maßnahmen berücksichtigt die Bewegung des zusätzlich erfassten Objekts. Dies hat den Vorteil, dass die Einleitung der Notbremsung und der gefährdungsminimierenden Maßnahmen nur dann erfolgt, wenn tatsächlich eine Kollision mit dem Objekt droht.

Die Erfassung der Umgebung des Fahrzeugs erfolgt im Allgemeinen durch dem Fachmann bekannte Vorrichtungen. So werden zum Erfassen der Umgebung des Fahrzeugs im Allgemeinen Sensoren eingesetzt, die Objekte in der Fahrzeugumgebung erfassen können. Geeignete Sensoren sind z.B. Ultraschallsensoren, Radarsensoren, Infrarotsensoren, kapazitive Sensoren oder LIDAR-Sensoren. Mit den Sensoren wird eine Entfernung zwischen einem Objekt und dem Sensor erfasst. Die so ermittelten Entfernungen werden einem Steuersystem zugeführt, in dem die erfassten Daten ausgewertet werden und so Richtung und Entfernung zu dem Objekt ermittelt werden. Geeignete Auswerteverfahren, mit denen die Richtung und die Entfernung zu einem Objekt bestimmt werden, sind zum Beispiel Triangulationsverfahren. Da von einem Sensor im Allgemeinen nur die Entfernung und nicht die Richtung zu einem Objekt erfasst werden kann, werden zur Richtungsbestimmung zum Objekt üblicherweise mindestens zwei Sensoren benötigt. Alternativ kann die Richtung auch durch zwei Messungen mit einem Sensor bei sich bewegendem Fahrzeug bestimmt werden. Aus den unterschiedlichen Laufzeiten vom Senden des Signals bis zum Empfang des Echos lässt sich dann die Entfernung des jeweiligen Sensors zum Objekt und damit auch die Richtung des Objekts bestimmen.

### Kurze Beschreibung der Zeichnungen

Ausführungsbeispiele der Erfindung sind in der Zeichnung dargestellt und werden in der nachfolgenden Beschreibung näher erläutert.

Die einzige Figur zeigt beispielhaft einen Einparkvorgang in eine Parklücke mit überraschend aufgetauchter Person.

### Ausführungsbeispiel der Erfindung

In der einzigen Figur ist ein Einparkvorgang schematisch dargestellt, bei dem überraschend eine Person in der Parklücke auftaucht.

Um ein Fahrzeug 1 einzuparken, muss zunächst eine geeignete Parklücke 3 gefunden werden. Bei semi-automatisierten und vollautomatisierten Einparksystemen erfolgt die Suche der Parklücke 3 durch Vermessung der Parklücke 3 während der Vorbeifahrt mit dem Fahrzeug 1. Hierzu ist seitlich am Fahrzeug 1 ein Sensor angebracht, der den Bereich neben dem Fahrzeug 1 ermittelt und so detektiert, ob eine geeignete Parklücke 3 vorhanden ist. Eine Parklücke 3 ist dann geeignet, wenn deren Länge größer ist als die Länge des Fahrzeugs.

Eine Parklücke 3 ist im Allgemeinen durch eine vordere Begrenzung 5, eine hintere Begrenzung 7 und eine seitliche Begrenzung 9 begrenzt. In der hier dargestellten Ausführungsform wird die vordere Begrenzung 5 durch ein vorderes Fahrzeug 11, die hintere Begrenzung 7 durch ein hinteres Fahrzeug 13 und die seitliche Begrenzung 9 durch einen Bordstein 15 gebildet. Neben der Begrenzung durch Fahrzeuge 11, 13 und Bordstein 15 kann die Begrenzung jedoch auch z.B. durch Pflanzen, Mauern oder ähnliches gebildet werden.

Die Erfassung der Parklücke 3 erfolgt durch geeignete am Fahrzeug 1 angebrachte Sensoren wie Ultraschallsensoren, Radarsensoren, Infrarotsensoren, kapazitive Sensoren oder LIDAR-Sensoren. Von den Sensoren wird jeweils der Abstand zu Objekten seitlich neben dem Fahrzeug erfasst und bei einem größeren Abstand, wie er z.B. in der hier dargestellten Ausführungsform zwischen dem vorderen Fahrzeug 11 und dem hinteren Fahrzeug 13 vorhanden ist, wird ein entsprechend größerer Abstand detektiert. Aus den so erfassten Daten kann ein Steuersystem im Fahrzeug 1 erfassen, ob eine Parklücke 3 vorliegt.

Die während des Vorbeifahrens des Fahrzeugs an der Parklücke 3 erfassten Informationen über die Parklücke 3 werden in einem geeigneten Speicher abgelegt.

Wenn eine geeignete Parklücke 3 gefunden wurde, wird bei semi-automatisierten und vollautomatisierten Einparksystemen zunächst eine Einparktrajektorie berechnet, entlang der das Fahrzeug 1 in die Parklücke 3 einparkt. Die Fahrzeugtrajektorie ist dabei üblicherweise die Bahn, die der Mittelpunkt der Hinterachse des Fahrzeugs 1 überfährt.

Das Einparken in eine Parklücke 3 erfolgt im Allgemeinen durch mindestens einen Rückwärtsfahrzug. Bei semi-automatisierten Systemen werden dem Fahrer über eine geeignete Ausgabeeinheit im Cockpit des Fahrzeugs 1 Lenkanweisungen gegeben, bei deren Befolgen das Fahrzeug 1 entlang der berechneten Einparktrajektorie in die Parklücke 3 eingeparkt wird. Bei vollautomatisierten Systemen übernimmt ein Aktor, der mit dem Steuergerät verbunden ist, das Lenken und der Fahrer braucht nur Gas zu geben oder zu bremsen. Alternativ ist es bei einem vollautomatisierten System auch möglich, dass das Beschleunigen und Bremsen ebenfalls vom Fahrzeug 1 übernommen wird.

Während des Einparkens des Fahrzeugs 1 wird von Sensoren im Frontbereich des Fahrzeugs 1 und Sensoren im Heckbereich des Fahrzeugs 1 die Umgebung des Fahrzeugs erfasst. Sensoren, mit denen die Umgebung erfasst wird, sind wie vorstehend bereits beschrieben, z.B. Ultraschallsensoren, Radarsensoren, Infrarotsensoren, kapazitive Sensoren oder LIDAR-Sensoren. Mit Hilfe der Sensoren im Frontbereich und im Heckbereich des Fahrzeugs 1 wird jeweils der Abstand zu Objekten in der Umgebung des Fahrzeugs ermittelt.

Die während des Einparkens des Fahrzeugs 1 in die Parklücke 3 erfassten Daten werden mit den Informationen über die Parklücke, die zuvor gespeichert wurden, verglichen. Auf diese Weise lässt sich erkennen, ob ein Objekt, das während des Einparkens des Fahrzeugs erfasst wurde, Teil der vorderen Begrenzung 5, der hinteren Begrenzung 7 oder der seitlichen Begrenzung 9 der Parklücke ist oder ein zusätzliches, zuvor nicht erfasstes Objekt. Ein solches Objekt ist z.B. ein Fußgänger 17, der z.B. beim Überqueren einer Straße die Parklücke 3 durchquert. Auch kann ein solches zusätzliches Objekt z.B. ein Tier oder ein beliebiges anderes Objekt sein, das in die Parklücke 3 geraten ist.

Wenn das Einparken des Fahrzeugs 1 in die Parklücke 3 nicht semi-automatisiert oder automatisiert erfolgt, werden im Speicher nicht die Daten der Parklücke 3 abgelegt, die beim Vorbeifahren des Fahrzeugs erfasst wurden, sondern es werden jeweils zuvor erfasste Daten der Sensoren im Heckbereich und im Frontbereich des Fahrzeugs 1 abgelegt. Diese abgelegten Daten werden dann mit später während des Einparkvorganges erfassten Daten verglichen. Auf diese Weise lässt sich bei nicht-automatisierten Systemen ebenfalls das erfindungsgemäße Verfahren anwenden.

Wenn von den Sensoren des Fahrzeugs 1 ein solches zusätzliches Objekt, z.B. der Fußgänger 17 erfasst wird, wird zunächst vom System geprüft, ob das Fahrzeug 1 noch vor einer Kollision mit dem Objekt, beispielsweise dem Fußgänger 17, zum Stillstand gebracht werden kann. Um festzustellen, ob das Fahrzeug 1 z.B. durch Einleiten einer Notbremsung oder durch Ausgabe einer Warnung an den Fahrer, eine Notbremsung einzuleiten, noch vor einer Kollision mit dem Objekt zum Stillstand gebracht werden kann, wird z.B. eine Berechnung des Anhaltewegs des Fahrzeugs durchgeführt. Der Anhalteweg berechnet sich aus der aktuellen Geschwindigkeit des Fahrzeugs 1, dem Abstand des Fahrzeugs 1 zum Objekt, gegebenenfalls der Geschwindigkeit und der Bewegungsrichtung des Objekts, wenn es sich bei dem Objekt um ein sich bewegendes Objekt, beispielsweise einen Fußgänger 17 handelt, sowie aller Reaktionszeiten. Bei vollautomatisierten Systemen betreffen die Reaktionszeiten insbesondere Rechenzeiten der verwendeten Systemkomponenten. Wenn die Bremsung durch den Fahrer erfolgen muss, muss zusätzlich die Reaktionszeit des Fahrers mit berücksichtigt werden. Der aus diesen Daten ermittelte Anhalteweg wird dann mit dem Abstand zum Objekt verglichen. Wenn der Anhalteweg kürzer ist als der Abstand zwischen Fahrzeug 1 und Objekt, so ist eine erfolgreiche Notbremsung möglich. Wenn der Anhalteweg länger ist als der Abstand zwischen dem Objekt und dem Fahrzeug 1, wird es mit hoher Wahrscheinlichkeit zu einer Kollision kommen.

Im Allgemeinen wird es sich bei dem zusätzlich erfassten Objekt um einen Fußgänger 17 handeln. Da ein Fußgänger spontan die Richtung, in die er sich bewegt, ändern kann, ist es möglich, durch eine geeignete Warnung an den Fußgänger eine Kollision auch dann zu verhindern, wenn der Anhalteweg zum berechneten Zeitpunkt länger ist als der Abstand zwischen dem Fußgänger 17 und dem Fahrzeug 1. Eine solche Warnung an den Fußgänger 17 kann z.B. erfolgen, indem dann, wenn ein solcher Fußgänger 17 vom Fahrzeug 1 erfasst wird, ein Signalton ausgegeben wird. Ein solcher Warnton wird im Allgemeinen von einem Signalhorn 19 des Fahrzeugs 1 ausgegeben. Üblicherweise wird das Signalhorn 19 auch als Hupe bezeichnet. Im Allgemeinen kann davon ausgegangen werden, dass ein Fußgänger 17 bei Ertönen des Signalhorns 19 so schnell wie möglich versucht, aus dem Gefahrenbereich zu gelangen, um so eine Kollision mit dem Fahrzeug 1 zu vermeiden. Da sich der Fußgänger 17 somit so schnell wie möglich vom Fahrzeug 1 wegbewegt, verlängert sich hierdurch der mögliche Anhalteweg des Fahrzeugs 1. Auf diese Weise erhöht sich die Wahrscheinlichkeit, dass sich der Fußgänger bis zum Stillstand des Fahrzeugs 1 so weit vom Fahrzeug 1 entfernt hat, dass eine Kollision vermieden wird.

Damit das Signalhorn 19 bei Erkennen einer möglichen Kollision einen Ton ausgibt, ist das Signalhorn 19 erfindungsgemäß mit dem System zur Steuerung des Einparkvorganges verbunden. Vom System zur Einparksteuerung wird dann ein geeignetes Signal an das Signalhorn 19 gegeben und dieses gibt den Signalton ab. Das Signal kann z.B. in Form einer geeigneten CAN-Botschaft abgegeben werden.

Neben dem Ausgeben des Signaltons durch das Signalhorn 19 wird vorzugsweise auch die Warnblinkanlage 21 des Fahrzeugs betätigt. Durch Betätigung der Warnblinkanlage 21 wird zusätzlich zum akustischen Signal auch ein optisches Signal abgegeben, das zusätzlich auf die Gefahrensituation hinweist.

Neben dem Betätigen des Signalhorns 19 und dem Auslösen der Warnblinkanlage 21 ist es weiterhin möglich, weitere Maßnahmen zum Fußgängerschutz einzuleiten. So ist es z.B. dann, wenn die Kollision mit dem Fußgänger 17 nicht im Heckbereich, wie in der Figur dargestellt, sondern im Frontbereich des Fahrzeugs 1 droht, möglich, die Motorhaube 23 des Fahrzeugs anzustellen. Hierzu wird die Motorhaube 23 auf der zur Windschutzscheibe des Fahrzeugs weisenden Seite angehoben. Hierdurch wird der Winkel zur Vertikalen verkleinert und ein Aufprall kann besser abgefangen werden, wodurch mögliche Verletzungen des Fußgängers reduziert werden können.

Neben dem Ausgeben eines Signaltons durch das Signalhorn 19 und dem Auslösen der Warnblinkanlage 21 sowie dem Ergreifen von zusätzlichen Fußgängerschutzmaßnahmen ist es auch möglich, Maßnahmen zum Insassenschutz zu ergreifen. Derartige Maßnahmen zum Insassenschutz umfassen z.B. eine Vorbereitung der Gurtstrafferfunktion oder des Airbagsystems. Um die Stärke des Gurtstraffers und das Auslösen der Airbags an die mögliche Kollision anzupassen, können zusätzlich Informationen über Kollisionswahrscheinlichkeit, Kollisionsstärke und Kollisionszeitpunkt ermittelt und bewertet werden.

Um die Gurtstraffer, das Airbagsystem und andere Maßnahmen ergreifen zu können, ist es vorteilhaft, wenn die jeweiligen Systeme mit dem den Einparkvorgang steuernden System kommunizieren können. Hierzu ist z.B. ein Bussystem, beispielsweise ein CAN-System, wie es üblicherweise bereits in Fahrzeugen eingesetzt wird, nutzbar.

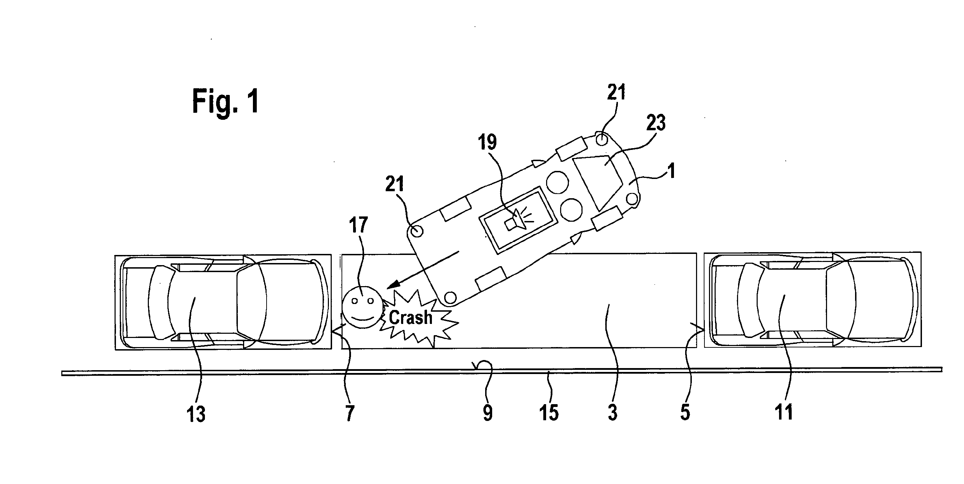

Neben dem in Figur 1 dargestellten Einparkvorgang kann das erfindungsgemäße Verfahren auch genutzt werden, um drohende Kollisionen beim Ausparken des Fahrzeugs 1 aus der Parklücke 3 zu vermeiden.

## Patentansprüche

1. Verfahren zur Unterstützung eines Fahrers eines Fahrzeugs (1) beim Einparken oder Ausparken in eine Parklücke (3) beziehungsweise aus einer Parklücke (3), folgende Schritte umfassend:
(a) Erfassen der Umgebung des Fahrzeugs (1) während des Einparkens oder Ausparkens und Vergleich mit zuvor erfassten Daten der Umgebung, um Objekte (17) zu erfassen, die zuvor nicht detektiert wurden,
(b) Prüfen ob ein Anhalten des Fahrzeugs (1) vor einer Kollision mit einem zusätzlich erfassten Objekt (17) noch möglich ist und Einleiten einer Notbremsung oder Ausgabe einer Warnung an den Fahrer, eine Notbremsung einzuleiten, sowie Ergreifen von gefährdungsminimierenden Maßnahmen, wenn eine Kollision nicht oder nur sehr knapp vermieden werden kann,
**dadurch gekennzeichnet, dass** zur Prüfung, ob noch ein Anhalten möglich ist, der Abstand zum Objekt (17), die Geschwindigkeit des Fahrzeugs (1), gegebenenfalls Geschwindigkeit und Bewegungsrichtung des Objekts (17) und alle Reaktionszeiten berücksichtigt werden, wobei die berücksichtigten Reaktionszeiten Totzeiten eines ESP-Systems oder die Reaktionszeit des Fahrers umfassen.

2. Verfahren gemäß Anspruch 1, **dadurch gekennzeichnet, dass** vor dem Erfassen der Umgebung während des Einparkens oder Ausparkens zunächst die Umgebung des Fahrzeugs (1) erfasst wird und eine geeignete Bahn ermittelt wird, um das Fahrzeug (1) in eine Parkposition oder in eine Position, die ein Ausfahren aus der Parklücke (3) ermöglicht, zu bewegen und das Fahrzeug entlang der Bahn durch automatischen Lenkeingriff oder durch Hinweise über geeignete Lenkpositionen an den Fahrer bewegt wird.

3. Verfahren gemäß einem der Ansprüche 1 oder 2, **dadurch gekennzeichnet, dass** die gefährdungsminimierenden Maßnahmen Maßnahmen zum Schutz von Personen in der Fahrzeugumgebung und Maßnahmen zum Insassenschutz umfassen.

4. Verfahren gemäß Anspruch 3, **dadurch gekennzeichnet, dass** die Maßnahmen zum Schutz von Personen in der Fahrzeugumgebung die Ausgabe eines Signaltons und ein Auslösen der Warnblinkanlage umfassen.

5. Verfahren gemäß Anspruch 3 oder 4, **dadurch gekennzeichnet, dass** die Maßnahmen zum Schutz von Personen in der Fahrzeugumgebung zusätzlich das Einleiten von Fußgängerschutzmaßnahmen bei Kollision mit dem Fahrzeug umfassen.

6. Verfahren gemäß einem der Ansprüche 3 bis 5, **dadurch gekennzeichnet, dass** die Maßnahmen zum Insassenschutz eine Vorbereitung der Gurtstrafferfunktion und eine Vorbereitung des Airbagsystems umfassen.

7. Verfahren gemäß einem der Ansprüche 1 bis 6, **dadurch gekennzeichnet, dass** dem Ergreifen der gefährdungsminimierenden Maßnahmen eine Bewertung von voraussichtlicher Kollisionsstärke, Kollisionswahrscheinlichkeit und Kollisionszeitpunkt vorausgeht.

8. Verfahren gemäß einem der Ansprüche 1 bis 7, **dadurch gekennzeichnet, dass** durch fortlaufende Erfassung der Umgebung des Fahrzeugs (1) eine Bewegung des zusätzlich erfassten Objekts (17) beobachtet wird und die Einleitung der Notbremsung oder die Ausgabe der Warnung an den Fahrer, eine Notbremsung einzuleiten, und das Ergreifen von zusätzlichen gefährdungsminimierenden Maßnahmen die Bewegung des zusätzlich erfassten Objekts (17) berücksichtigt.

## Claims

1. Method for assisting a driver of a vehicle (1) in parking in or leaving a parking space (3), comprising the following steps:
(a) sensing the surroundings of the vehicle (1) during the parking or leaving operation and comparison with previously acquired data on the surroundings in order to sense objects (17) which have previously not been detected,
(b) testing whether it is still possible to stop the vehicle (1) before collision with an additionally sensed object (17), and initiating an emergency braking operation or outputting a warning to the driver to initiate an emergency braking operation, and taking hazard-minimizing measures if a collision cannot be avoided, or can only just be avoided,
**characterized in that** the distance from the object (17), the speed of the vehicle (1), if appropriate the speed and direction of movement of the object (17), and all the reaction times are taken into account in checking whether stopping is still possible, wherein the reaction times which are taken into account comprise lag times of an ESP system or the reaction time of the driver.

2. Method according to Claim 1, **characterized in that** before the sensing of the surroundings during the parking or leaving operation the surroundings of the vehicle (1) are firstly sensed and a suitable path is determined in order to move the vehicle (1) into a parked position or into a position which permits the vehicle to leave the parking space (3), and the vehicle is moved along the path through automatic steering intervention or by instructions to the driver relating to suitable steering positions.

3. Method according to one of Claims 1 or 2, **characterized in that** the hazard-minimizing measures comprise measures for protecting persons in the surroundings of the vehicle and measures for vehicle occupant protection.

4. Method according to Claim 3, **characterized in that** the measures for protecting persons in the surroundings of the vehicle comprise outputting a signal tone and triggering the hazard warning lights.

5. Method according to Claim 3 or 4, **characterized in that** the measures for protecting persons in the surroundings of the vehicle additionally comprise initiating pedestrian protection measures in the event of a collision with the vehicle.

6. Method according to one of Claims 3 to 5, **characterized in that** the measures for vehicle occupant protection comprise preparing the seatbelt pretensioning function and preparing the airbag system.

7. Method according to one of Claims 1 to 6, **characterized in that** the implementation of hazard-minimizing measures is preceded by an evaluation of the expected collision strength, probability of a collision and time of the collision.

8. Method according to one of Claims 1 to 7, **characterized in that** by means of continuous sensing of the surroundings of the vehicle (1) a movement of the additionally sensed object (17) is observed and the initiation of the emergency braking operation or the outputting of the warning to the driver to initiate an emergency braking operation, and the implementation of additional hazard-minimizing measures take into account the movement of the additionally sensed object (17).

## Revendications

1. Procédé pour assister un conducteur d'un véhicule (1) lors d'un stationnement ou d'une sortie de stationnement dans une place de stationnement (3) et/ou hors d'une place de stationnement (3), comprenant les étapes suivantes :
(a) détection de l'environnement du véhicule (1) pendant le stationnement ou la sortie de stationnement et comparaison avec des données de l'environnement détectées au préalable, pour détecter des objets (17) n'ayant pas été détectés auparavant ;
(b) vérification de si un arrêt du véhicule (1) est encore possible avant un choc avec un objet (17) détecté en sus et mise en place d'un freinage d'urgence ou envoi d'un message d'avertissement du conducteur lui demandant de réaliser un freinage d'urgence ainsi que prise de mesures de réduction des atteintes physiques lorsqu'un choc ne peut pas être évité ou ne peut être évité que de très peu seulement ;
**caractérisé en ce que** la vérification de si un arrêt est encore possible se fait au moyen de la distance par rapport à l'objet (17), de la vitesse du véhicule (1), le cas échéant de la vitesse et de la direction de déplacement de l'objet (17) et de tous les temps de réaction, les temps de réaction pris en compte comprenant les temps morts d'un système ESP et les temps de réaction du conducteur.

2. Procédé selon la revendication 1, **caractérisé en ce qu'**avant la détection de l'environnement pendant le stationnement ou la sortie de stationnement, l'environnement du véhicule (1) est d'abord détecté et qu'une trajectoire adaptée est calculée permettant de déplacer le véhicule (1) dans une position garée ou dans une position permettant une sortie de la place de stationnement (3) et que le véhicule est déplacé le long de la trajectoire par pilotage automatique ou en donnant des indications de pilotage au conducteur.

3. Procédé selon l'une quelconque des revendications 1 ou 2, **caractérisé en ce que** les mesures de réduction des atteintes physiques sont des mesures de protection des personnes se trouvant dans l'environnement du véhicule et des mesures de protection des passagers du véhicule.

4. Procédé selon la revendication 3, **caractérisé en ce que** les mesures de protection des personnes se trouvant dans l'environnement du véhicule comprennent l'émission d'un signal d'avertissement et un déclenchement de l'installation d'avertissement clignotante.

5. Procédé selon la revendication 3 ou 4, **caractérisé en ce que** les mesures de protection des personnes se trouvant dans l'environnement du véhicule comprennent en outre l'introduction de mesures de protection des piétons en cas de choc avec le véhicule.

6. Procédé selon l'une quelconque des revendications 3 à 5, **caractérisé en ce que** les mesures de protection des passagers comprennent une préparation de la fonction de ceinture de sécurité et une préparation du système d'airbag.

7. Procédé selon l'une quelconque des revendications 1 à 6, **caractérisé en ce qu'**une évaluation de la puissance prévisible du choc, de la probabilité du choc et du moment du choc précède la mise en place des mesures de réduction des atteintes physiques.

8. Procédé selon l'une quelconque des revendications 1 à 7, **caractérisé en ce qu'**un mouvement de l'objet (17) détecté en sus est observé par détection continue de l'environnement du véhicule (1) et que l'introduction d'un freinage d'urgence ou l'envoi d'un message d'avertissement du conducteur lui demandant de réaliser un freinage d'urgence et la prise de mesures de réduction des atteintes physiques supplémentaires prennent en compte le mouvement de l'objet (17) détecté en sus.
